# EUROPÄISCHE PATENTSCHRIFT

(11) **EP 3 815 874 B1**
(45) Veröffentlichungstag und Bekanntmachung des Hinweises auf die Patenterteilung: **16.08.2023**
(21) Anmeldenummer: 20204714.8
(22) Anmeldetag: 29.10.2020
(51) Int. Cl.: B29C 48/13, B29C 48/09, B29C 48/30, F16L 47/32, B29C 65/02, B29C 65/16, B29C 65/20, B29C 65/48, F16L 11/12

(54) **VERFAHREN ZUR HERSTELLUNG EINER ROHRLEITUNG MIT ANBINDUNGSSTELLE**
METHOD FOR PRODUCING A PIPE WITH CONNECTION POINT
PROCÉDÉ DE FABRICATION D'UN TUYAU DOTÉ D'UN POINT DE RACCORDEMENT

(30) Priorität: 04.11.2019 DE 102019129610
(43) Veröffentlichungstag der Anmeldung: 05.05.2021
(73) Patentinhaber: Voss Automotive GmbH, 51688 Wipperfürth (DE)
(72) Erfinder: GRAMCKOW, Erik, 53757 St. Augustin (DE); KOLBERG, Ralf, 50733 Köln (DE); HEIENBROK, Mark, 51766 Engelskirchen (DE)
(74) Vertreter: Dr. Solf & Zapf Patent- und Rechtsanwalts PartG mbB

(56) Entgegenhaltungen:
- EP-A1- 3 348 703
- WO-A1-94/11663
- DE-A1- 2 552 965
- DE-U1- 20 315 156
- DE-U1- 29 906 905
- US-A- 3 784 346
- US-A1- 2003 160 356

## Beschreibung

Die Erfindung betrifft ein Verfahren zur Herstellung einer Rohrleitung, gemäß dem Oberbegriff des Anspruchs 1.

Weiterhin betrifft die Erfindung eine Rohrleitung, welche nach einem solchen Verfahren zur Herstellung hergestellt ist, und eine Rohrleitungsanordnung, aufweisend zumindest zwei Rohrleitungen.

Aus der DE 25 52 965 A1 ist eine Rohrleitung für Pflanzenbewässerungsanlagen sowie ein Verfahren zur Herstellung einer solchen Rohrleitung bekannt. Insbesondere weist diese Rohrleitung Abzweigstutzen zur fluidischen Abzweigung eines durch die Rohrleitung strömenden Fluides, insbesondere Wasser, auf.

Aus der EP 3 348 703 A1 ist ebenfalls eine Rohrleitung für einen Fluidtransport bekannt, wobei die Rohrleitung in der Wandung Öffnungen aufweist, an welche ein Abzweig angeschlossen werden kann, so dass das in der Rohrleitung befindliche Fluid abgezweigt werden kann.

Die DE 299 06 905 U1 offenbart ein Schutzrohr für Kabel, wobei das Schutzrohr zum Einlegen der Kabel entlang der Längsachse geteilt ausgebildet ist, so dass die obere Hälfte nach Einlegen eines Kabels in das Schutzrohr mit der unteren Hälfte verbindbar ist.

Aus der DE 203 15 156 U1 ist ein Wellrohr mit segmentierten Glattbereichen bekannt. In die Glattbereiche werden Öffnungen eingebracht, an die eine Anschlussleitung angeschlossen werden kann.

Die US 3 784 346 A offenbart einen Corrugator zur Herstellung von Wellrohren, wobei in die Formbacken des Corrugators Einlegteile derart montierbar sind, dass in einzelnen Abschnitten Glattbereiche in der Wandung der hergestellten Rohrleitung ausgebildet sind, in welchen die Wellstruktur unterbrochen ist. Insbesondere sieht es die US 3 78 346 A vor, dass in die glatten Bereiche in einem Bohrverfahren Öffnungen in die Rohrleitung eingebracht werden.

Aus der US 2003/160356 A1 ist ein weiteres Herstellungsverfahren mit einem Corrugator zur Erzeugung von Wellrohren bekannt, wobei mittels Formbacken des Corrugators die Form der Wandung des Wellrohrs beeinflusst wird.

Die WO 94/11663 A1 offenbart eine Schutzhülle zum Führen von Kabeln oder Schläuchen, wobei diese Schutzhülle in einem Corrugator hergestellt und nachfolgend mit einem Schnittwerkzeug längs aufgeschnitten wird. Weiterhin weist diese Schutzhülle entlang des Längsschnitts Verschlusselemente auf, so dass die Schutzhülle radial aufgeklappt und nach einem Einlegen eines Kabels verschlossen werden kann.

Ein Herstellungsverfahren der eingangs genannten Art wird regelmäßig bei Rohrleitungen insbesondere in der Kraftfahrzeugtechnik verwendet. Bekanntermaßen kann eine so hergestellte Rohrleitung z. B. in einem modular aufgebauten Temperiersystem eines Energiespeichers, insbesondere in einem Kühlsystem für Fahrzeugbatterien, zur Anwendung kommen.

Insbesondere ist es aus dem Stand der Technik bekannt, dass die Rohrleitungen mit dem Corrugator als Endlos-Rohre geformt werden, wobei sich die einzelnen Rohrleitungsabschnitte strukturell nicht oder lediglich innerhalb einer Herstellungstoleranz voneinander unterscheiden. Die bekannten Rohrleitungen weisen daher über ihre Länge regelmäßig ein homogenes Rohrprofil und insbesondere einen über die Länge gleichbleibenden Durchflussquerschnitt auf.

Batterien bzw. Akkuzellen von Elektro- und Hybridfahrzeugen müssen in einem definierten Temperaturfenster betrieben werden, um deren Haltbarkeit zu gewährleisten und eine Schädigung zu vermeiden. Bekannte Temperiersysteme weisen zu diesem Zweck durchströmbare Kühlplatten auf, insbesondere Aluminium-Kühlplatten, an denen die Akkuzellen positioniert sind. Um eine homogene Temperierung zu ermöglichen, werden die Kühlplatten typischerweise einzeln mit einem Temperiermedium, beispielsweise einem Gemisch aus Wasser und Glykol, durchströmt.

Insbesondere beim Einsatz in der Kraftfahrzeugtechnik stehen solchen Kühlsystemen nur ein begrenzter Bauraum zur Verfügung. Unbefestigte Nebenleitungen, die lose durch den Bauraum geführt werden, erschweren dabei die Montage und die Wartung derart, dass sie den Zugang zu dem Kühlsystem und anderen Aggregaten erschweren und selbst oftmals nicht schnell und effizient im Raum aufgefunden werden. Nebenleitungen können beispielsweise elektrische Leitungen, zum Beispiel zum Ansteuern des Kühlsystems oder von elektrisch geregelten Ventilen sein, aber auch fluidische Leitungen, z. B. zum Leiten von Temperiermitteln, Gasen oder Ölen. Weiterhin sind freischwingende unbefestigte Leitungen anfälliger für Schäden, wie z. B. Brüche, insbesondere an den Verbindungsstellen, oder neigen dazu, sich durch Vibrationen aus den Verbindungsstellen zu lösen.

In bekannter Art ist es in der Praxis gängig, die Rohrleitungen so herzustellen, dass derartige Nebenleitungen mit Schlauchschellen oder Kabelbindern an den Rohrleitungen zu befestigen, damit die Nebenleitungen zum einen leicht im Raum gefunden werden können und zum anderen nicht mehr frei im Raum geführt werden. Diese Lösungen haben allerdings den Nachteil, dass es auf der Rohrleitung keine genormten Rohrleitungsabschnitte für die Positionierung der als Anbindungsstellen ausgebildeten Kabelbinder bzw. Schlauchschellen gibt und diese daher mehr oder minder willkürlich von dem Monteur an der Rohrleitung befestigt werden. Ein weiterer Nachteil insbesondere bei Kabelbindern ist, dass diese sich nur umständlich wieder lösen lassen, und daher meistens bei der Demontage zerstört werden, was wiederum Abfall erzeugt. Weiterhin entsteht bei der Montage eines Kabelbinders ein Überstand hinter dem Kabelbinderkopf. Beim Abtrennen dieses Überstandes entsteht ein scharfkantiger Abschluss, welcher das Verletzungsrisiko erhöht. Sowohl der Kabelbinder als auch die Schlauchschelle als Anbindungsstelle haben weiterhin den Nachteil, dass bereits bei der Montage ein großer Bauraum benötigt wird, derart groß, dass zumindest der Kabelbinder oder die Schlauchschelle selbst einmal um die Rohrleitung gelegt werden kann. Ein anderer ungewollter Aspekt betrifft die Wandung der Rohrleitung. Wenn der als Anbindungsstelle verwendete Kabelbinder oder Schlauchschelle die Rohrleitung umgreift, entsteht eine radial zum Innern der Rohrleitung gerichtete Verpressung zwischen Anbindungsstelle und der Wandung der Rohrleitung. Während der Lebensdauer der Rohrleitung scheuert die Schlauchschelle bzw. der Kabelbinder auf der Wandung der Rohrleitung, so dass die Rohrleitung geschwächt wird und zu Brüchen oder Leckagen neigen kann.

Der Erfindung liegt die Aufgabe zugrunde, ein verbessertes Herstellungsverfahren für eine Rohrleitung der eingangs genannten Art zu Verfügung zu stellen, welche die bekannten Probleme der Rohrleitung überwindet, indem sie insbesondere den Raumbedarf bei der Montage der Rohrleitung und die Verletzungsgefahr verringert sowie die Haltbarkeit der Rohrleitung verbessert.

Die Aufgabe wird erfindungsgemäß durch die Merkmale des Anspruchs 1 gelöst. Dabei wird in zumindest einem Rohrleitungsabschnitt eine Anbindungsstelle zur Anbindung eines Funktionselementes ausgebildet wird, indem die Trennebene der Formbacken zentral durch die Anbindungsstelle verläuft. Erfindungsgemäß wird eine Anschlussstelle senkrecht zur Trennebene in der Wandung der Rohrleitung ausgebildet und die Anbindungsstelle wird zum Durchflussquerschnitt der Rohrleitung betrachtet um 90° zu der Anschlussstelle in der Wandung versetzt ausgebildet.

Die erfindungsgemäße Ausführung hat den Vorteil, dass die Anbindungsstelle als ein monolithisch mit der Wandung ausgebildetes Formteil ausgebildet wird.

"Monolithisch mit der Wandung ausgebildetes Formteil" meint insbesondere, dass die Anbindungsstelle materialeinheitlich zu der Wandung des Rohrleitungsabschnitts ausgebildet ist, in dem die Anbindungsstelle angeordnet ist und vorzugsweise in einem Herstellungsverfahren bei einem Formungsschritt des Rohrleitungsabschnitts synchron mit der Wandung geformt ist.

Die erfindungsgemäße Ausführung hat den Vorteil, dass die Anbindungsstellen mittels der Formbacken an genormten oder kundenspezifischen Rohrleitungsabschnitten der Rohrleitung angeordnet werden. Das ermöglicht insbesondere bei der Montage mehrerer Kühlsysteme gleicher Gattung einen einheitlichen Aufbau. Weiterhin können an den Anbindungsstellen als Funktionselemente Führungselemente, wie z. B. Clips oder Laschen, vormontiert werden, so dass Nebenleitungen bei der Montage lediglich eingehängt bzw. eingeclipst werden müssen. Vorzugsweise dient die Anbindungsstelle dazu, die Rohrleitung selbst an einem Träger, zum Beispiel an einer Karosserie in einem Fahrzeug, zu fixieren. Insbesondere werden die Funktions- bzw. Führungselemente stoffschlüssig mit der Anbindungsstelle verbunden, vorzugsweise verklebt, am bevorzugtesten verschweißt. Durch die Führungselemente wird insbesondere der Montageablauf an sich vereinfacht und beschleunigt, der Raumbedarf verringert und das Verletzungsrisiko, insbesondere hinsichtlich der aus dem Stand der Technik bekannten Kabelbinder, deutlich verringert. Alternativ zu den Führungselementen kann die Anbindungsstelle einer Rohrleitung mit der Anbindungsstelle einer anderen Rohrleitung verbunden, insbesondere stoffschlüssig verbunden, vorzugsweise verklebt, am bevorzugtesten verschweißt werden. Die Anbindungsstellen der Rohrleitungen stellen dabei für die jeweilig andere Anbindungsstelle der anderen Rohrleitung das Funktionselement dar. Vorteilhaft kann dadurch eine Rohrleitungsanordnung geschaffen werden, insbesondere kann eine Rohrleitung einen Zulauf für das Kühlsystem bilden und eine andere Rohrleitung einen Rücklauf für das Kühlsystem bilden. Besonders vorteilhaft sind dabei die Zulaufrohrleitung und die Rücklaufrohrleitung zumindest teilweise parallel geführt.

Nebenleitungen können jegliche Leitungen sein, sowohl elektrisch leitende als auch fluidführende Leitungen, unabhängig davon, ob sie mittelbar oder unmittelbar im Zusammenhang mit der Rohrleitung selbst stehen.

In einer vorteilhaften Ausführungsform der Erfindung wird die Anbindungsstelle als ein radial von dem Durchflussquerschnitt nach außenweisend ausgebildeter Sockel ausgebildet. Vorteilhaft kann durch den radialen Abstand zur Wandung ein Funktionselement, insbesondere ein Führungselement, vorzugsweise ein Clip oder alternativ eine als Funktionselement dienende Anbindungsstelle einer anderen Rohrleitung leicht an der Anbindungsstelle montiert, insbesondere stoffschlüssig verbunden, vorzugsweise verklebt, am bevorzugtesten verschweißt werden.

Insbesondere wird der Sockel kegelstumpfartig ausgebildet, wobei der Sockel vorzugsweise in seinem Innern einen Hohlraum aufweist, welcher bevorzugt zum Durchflussquerschnitt geöffnet ausgebildet ist. Vorteilhaft begünstigt die Kegelstumpfform die Festigkeit der Anbindungsstelle und verhindert ein radiales Eindrücken der Anbindungsstelle in Richtung des Durchflussquerschnitts. Besonders vorteilhaft hat sich dabei als Kegelstumpfform eine Pyramidenstumpfgeometrie herausgestellt. Die Anbindungsstelle kann insbesondere als ein monolithisch mit der Wandung ausgebildetes Formteil zusammen mit der Wandung der Rohrleitung in einem Formungsschritt des Rohrleitungsabschnitts synchron geformt werden.

Bei Kühlsystemen kann die Rohrleitung vorteilhaft als Sammelleitung verwendet werden. Die Zu- und Abläufe für das Kühlmittel der Kühlplatten werden dabei in als Sammelleitung ausgebildeten Rohrleitungen als Vor- bzw. Rücklauf geführt. Es ist daher vorgesehen, dass in der Wandung mindestens eine Anschlussstelle mit einer Öffnung zum fluidischen Verbinden einer Anschlussleitung mit dem Durchflussquerschnitt der Rohrleitung ausgebildet ist. Dadurch können Zu- und Abläufe leicht als Anschlussleitung mit der Rohrleitung verbunden werden. Erfindungsgemäß wird dies dadurch ermöglicht, indem die Anschlussstelle senkrecht zur Trennebene in der Wandung der Rohrleitung ausgebildet wird.

Erfindungsgemäß wird die Anbindungsstelle zum Durchflussquerschnitt der Rohrleitung betrachtet um 90° zu der Anschlussstelle in der Wandung versetzt ausgebildet. Die zum Durchflussquerschnitt betrachtet versetzte Positionierung birgt insbesondere herstellungstechnische Vorteile. Insbesondere bei der Herstellung der Rohrleitung mittels eines Corrugators formen jeweils zwei Formbacken einen Rohrleitungsabschnitt. Die Formbacken öffnen sich in entgegengesetzte Öffnungsrichtungen aus der Trennebene heraus. Durch die versetzte Anordnung ist es möglich, die Anbindungsstelle so anzuordnen, dass die Trennebene zentral durch die Anbindungsstelle verläuft und synchron in der Wandung der Rohrleitung die Anschlussstelle geformt werden kann, so dass die Anschlussstelle senkrecht zur Trennebene in der Wandung ausgebildet ist. Weiterhin birgt diese Anordnung bei der Herstellung den Vorteil, dass die Anschlussstelle mit radial zum Durchflussquerschnitt ausgebildeten Nuten bzw. Rippen mit der Formbacke, insbesondere als ein monolithisch mit der Wandung ausgebildetes Formteil, ausgebildet werden kann, ohne dass eine Nachbearbeitung, z. B. Fräsen notwendig ist.

Gemäß einer weiteren vorteilhaften Ausbildung der Rohrleitung wird ein Rohrleitungsabschnitt als ein gewellter Wellrohrabschnitt mit einer gewellt ausgebildeten Wandung und/oder ein Rohrleitungsabschnitt als ein glatter Glattrohrabschnitt mit einer glatt ausgebildeten Wandung ausgebildet. Vorteilhaft kann durch diese Ausbildung ein Toleranzausgleich zwischen den einzelnen Anschlussstellen für die Anschlussleitung und/oder Anbindungsstellen und/oder den Anschlussstellen der Rohrleitung selbst generiert werden. Insbesondere in einem Temperiersystem ist ein Toleranzausgleich zwischen den Kühlplatten und zwischen den Anschlüssen an einer Kühlplatte besonders vorteilhaft. Insbesondere wird die Rohrleitung sowohl mit Glattrohrabschnitten als auch mit Wellrohrabschnitten gefertigt, wobei für den Toleranzausgleich insbesondere die vorteilhaften Eigenschaften der Wellrohrabschnitte genutzt werden und die Anbindungsstellen und/oder Anschlussstellen insbesondere in den Glattrohrabschnitten ausgebildet werden.

Weiterhin wird die der Erfindung zu Grunde gelegte Aufgabe mittels einer Rohrleitung nach Anspruch 12 gelöst. Die Rohrleitung umschließt mit einer Wandung einen Durchflussquerschnitt für das Fluid, wobei an der Außenseite der Wandung zumindest eines Rohrleitungsabschnitts mindestens eine Anbindungsstelle zur Anbindung von einem Funktionselement angeordnet ist. Weiterhin ist in der Wandung der Rohrleitung mindestens eine Anschlussstelle mit einer Öffnung zum fluidischen Verbinden einer Anschlussleitung mit dem Durchflussquerschnitt der Rohrleitung ausgebildet. Zur Lösung der Aufgabe ist die Anbindungsstelle zum Durchflussquerschnitt der Rohrleitung betrachtet um 90° zu der Anschlussstelle in der Wandung versetzt ausgebildet und die Rohrleitung in einem Corrugator gemäß einem Herstellungsverfahren der vorgenannten Art geformt.

Zusätzlich wird die der Erfindung zu Grunde gelegte Aufgabe mittels einer Rohrleitungsanordnung nach Anspruch 14 gelöst, wobei die Rohrleitungsanordnung zumindest zwei Rohrleitungen, mit jeweils einer Wandung aufweist, die jeweils einen Durchflussquerschnitt für das Fluid umschließen, wobei die Rohrleitungen jeweils an der Außenseite der Wandung zumindest eines Rohrleitungsabschnitts mindestens eine Anbindungsstelle zur Anbindung von einem Funktionselement angeordnet ist. Erfindungsgemäß weist zumindest eine der Rohrleitungen die Merkmale der vorgenannten erfindungsgemäßen Rohrleitung auf und ist in einem Corrugator gemäß einem Herstellungsverfahren der vorgenannten Art geformt, und die Anbindungsstellen sind jeweils als ein monolithisch mit der Wandung ausgebildetes Formteil ausgebildet und zumindest eine Anbindungsstelle jeweils einer Rohrleitung ist das Funktionselement für die jeweils andere Anbindungsstelle der anderen Rohrleitung, wobei die Rohrleitungen jeweils über zumindest eine ihrer Anbindungsstellen miteinander verbunden sind.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivisch dargestellte erfindungsgemäße Rohrleitungsanordnung mit zwei erfindungsgemäß hergestellten Rohrleitungen,
- Fig. 2: eine weitere perspektivisch dargestellte Rohrleitungsanordnung mit zwei hergestellten Rohrleitungen und einem montierten Führungselement,
- Fig. 3: eine Schnittansicht auf den Durchflussquerschnitt einer Ausführung der hergestellten Rohrleitung,
- Fig. 4: eine Schnittansicht auf den Durchflussquerschnitt durch eine Anschlussstelle einer Ausführung der hergestellten Rohrleitung und
- Fig. 5: die Schnittansicht der hergestellten Rohrleitung gemäß Figur 3 mit schematisch dargestellten Formbacken eines Corrugators.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

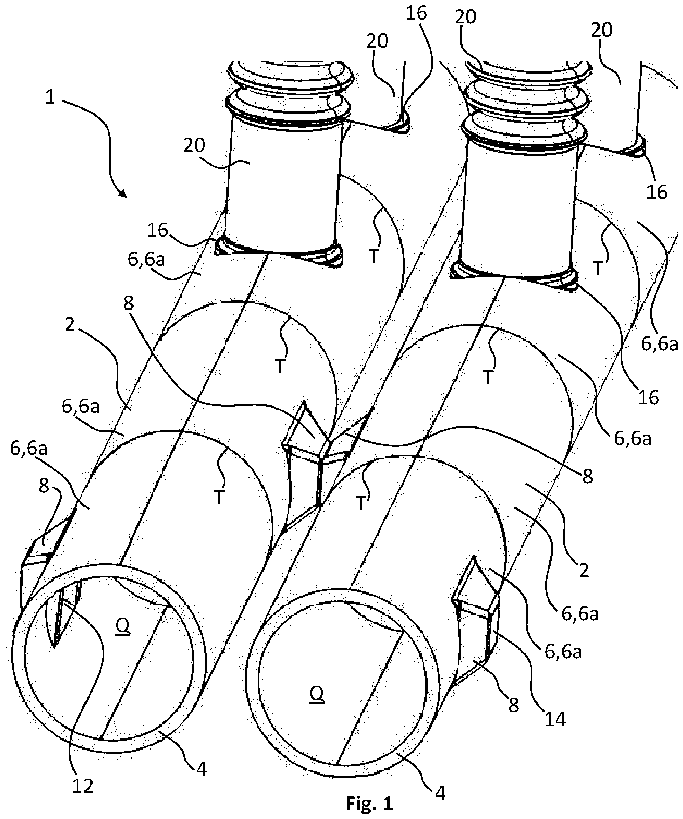

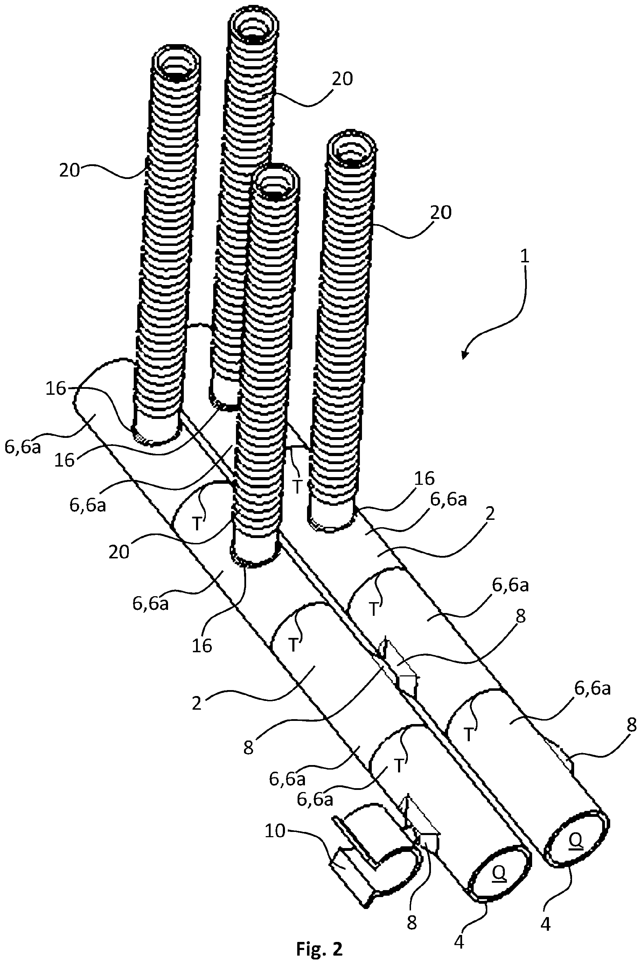

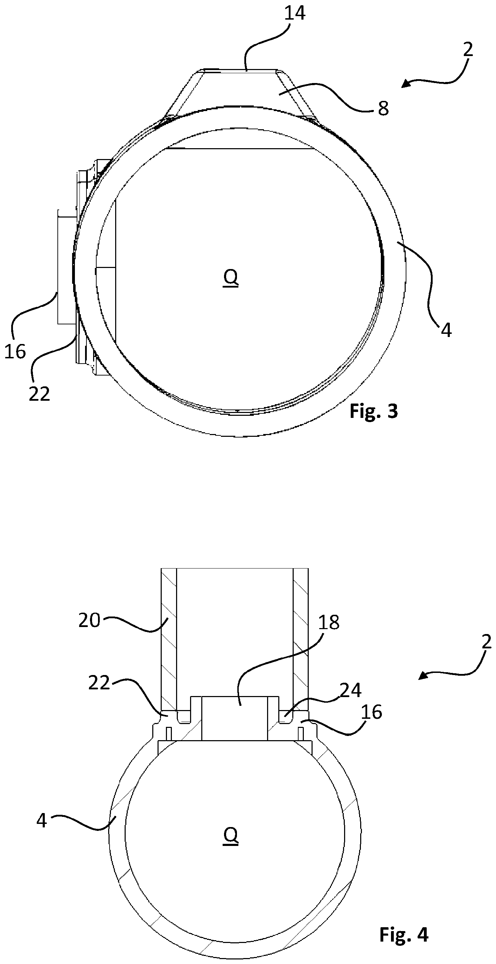

In Figur 1 und 2 ist jeweils eine Rohrleitungsanordnung 1 dargestellt, die zwei Rohrleitungen 2 für Fluide mit einer Wandung 4 aufweist. Wie in den Figuren 3 und 4 dargestellt, umschließt die Wandung 4 einen Durchflussquerschnitt Q für das Fluid.

An der Außenseite der Wandung 4 zumindest eines Rohrleitungsabschnitts 6 der Rohrleitung 2 ist zudem mindestens eine Anbindungsstelle 8 zur Anbindung von einem Funktionselement angeordnet. Die in den Figuren 1 und 2 dargestellten Rohrleitungen 2 weisen mehrere Rohrleitungsabschnitte 6 auf, diesbezüglich sind die Rohrleitungsabschnitte 6 schematisch durch Trennlinien T quer zur Strömungsrichtung auf der Außenseite der Wandung 4 dargestellt.

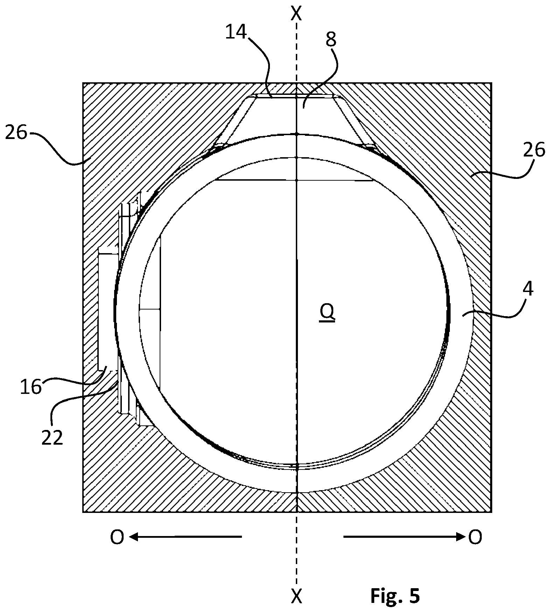

Ein Verfahren zur Herstellung der Rohrleitung 2 sieht vor, dass die Rohrleitung 2 in einem Corrugator geformt wird und mit der Wandung 4 den freien Durchflussquerschnitt Q für das Fluid umschließt. Die Rohrleitung 2 wird geformt, indem jeweils zwei Formbacken 26 einen Rohrleitungsabschnitt 6 umschließend, wie in Figur 5 schematisch dargestellt, formen und sich in entgegengesetzte Öffnungsrichtungen O aus einer Trennebene X heraus öffnen. Dadurch wird die Rohrleitung 2 entformt.

In zumindest einem Rohrleitungsabschnitt 6 wird eine Anbindungsstelle 8 ausgebildet, indem die Trennebene X der Formbacken 26 zentral durch die Anbindungsstelle 8 verläuft. Dadurch, dass die Anbindungsstelle 8 der Rohrleitung 2 in der Trennebene X liegt, wird die Anbindungsstelle 8 vorteilhaft ohne Hinterschnitte geformt und die Gefahr verringert, dass sich beim Öffnen der Formbacken 26 die radiale Ausprägung der Anbindungsstelle 8 verändert.

Die Formbacken 26, die Trennebene X sowie die Öffnungsrichtungen O der Formbacken 26 sind in Figur 5 schematisch dargestellt.

Vorteilhaft ist jede nach diesem Verfahren hergestellte Rohrleitung 2 als Endlos-Rohr mittels des Corrugators herstellbar.

Vorteilhaft wird die Anbindungsstelle 8 als ein monolithisch mit der Wandung 4 ausgebildetes Formteil ausgebildet.

"Monolithisch mit der Wandung 4 ausgebildetes Formteil" meint insbesondere, dass die Anbindungsstelle 8 materialeinheitlich zu der Wandung 4 des Rohrleitungsabschnitts 6 ausgebildet ist, in dem die Anbindungsstelle 8 angeordnet ist und insbesondere in einem Herstellungsverfahren bei einem Formungsschritt des Rohrleitungsabschnitts 6 synchron mit der Wandung 4 geformt ist.

Ein Corrugator wird regelmäßig zur Herstellung von Kunststoffrohren, insbesondere gewellten Kunststoffrohren, verwendet. Der Corrugator weist vorzugsweise einen mit einem Extruder verbundenen Spritzkopf, Formbacken 26, eine Vakuumabsaugung und ein Formluftsystem auf. Der Spritzkopf formt einen Schmelzstrom aus dem Extruder zu einem Schlauch, wobei sich eine Wanddicke des Schlauchs bzw. der späteren Rohrleitung 2 über einen Düsenspalt einstellen lässt. Die Formbacken 26 sind die Negativform eines Rohrleitungsabschnitts 8 der Rohrleitung 2 und weisen eine Negativstruktur auf, welche der Wandung 4 der Rohrleitung 2 entspricht, z. B. der gewellten Struktur für einen Wellrohrabschnitt. Hierbei sind die zwei die Rohrleitung 2 formenden Formbacken 26 jeweils in einer Corrugator-Kette angeordnet, wobei jeweils eine Anzahl gleicher oder verschiedener Formbacken hintereinandergeschaltet ist. Die Formbacken jeder Corrugatorkette können dabei vorzugsweise derart hintereinandergeschaltet sein, dass die Rohrleitung 2, insbesondere als Endlos-Rohr, nach kundenspezifischen Anforderungen an die Rohrleitungsabschnitte 6, insbesondere betreffend die Lage, den Durchmesser und die Anzahl der Anbindungsstellen 8 und/oder die Anschlussstellen 16, hergestellt wird. Zur Wärmeabführung werden die Formbacken 26 vorzugsweise gekühlt. Insbesondere wird der aus dem Düsenspalt austretende Schmelzstrom mittels Vakuum in die Formbacken 26 gesaugt. Die Formluft strömt aus einer Düse in den durch den Düsenkopf zu einem Kunststoffschlauch geformten Schmelzstrom und erzeugt im Innern des Kunststoffschlauches einen Überdruck, der die Schmelze in die Formbacken 26 drückt.

Die Figuren 1 und 2 zeigen dabei eine bevorzugte Ausführung jeweils zweier erfindungsgemäß hergestellter Rohrleitungen 2, welche jeweils zwei Anbindungsstellen 8 aufweisen, die insbesondere um 180° zum Durchflussquerschnitt Q betrachtet angeordnet werden.

In Figur 2 weist die hergestellte Rohrleitung 2 eine Anbindungsstelle 8 mit einem vorteilhaft montierten, als Führungselement 10 ausgebildeten Funktionselement auf. Funktionselemente können im erfindungsgemäßen Sinne insbesondere alle Elemente sein, welche ganz oder teilweise, unabhängig von ihrer Wirkung oder ihrem Zweck, mit der Rohrleitung 2 verbunden werden können. Führungselemente 10 können, wie in Figur 2 dargestellt, insbesondere Clips 10 oder Laschen sein. Bevorzugt werden die Funktionselemente, insbesondere die Führungselemente 10, vor der Montage der Rohrleitung 2 z. B. in einem Kühlsystem vormontiert. Insbesondere können mittels der Führungselemente 10 nicht dargestellte Nebenleitungen bei der Montage lediglich durch Einhängen oder Einclipsen montiert werden. Vorteilhaft wird dadurch der Montageablauf vereinfacht und beschleunigt, der Raumbedarf verringert und das Verletzungsrisiko verringert.

In einer vorteilhaften Variante werden die Funktionselemente, insbesondere die Führungselemente 10, vorzugsweise stoffschlüssig mit der Anbindungsstelle 8 verbunden, insbesondere verklebt, am bevorzugtesten verschweißt.

Die Nebenleitungen sind in Figur 1 und 2 nicht dargestellt. Nebenleitungen können jegliche Leitungen sein, sowohl elektrisch leitende als auch fluidführende Leitungen, unabhängig davon, ob sie mittelbar oder unmittelbar im Zusammenhang mit der Rohrleitung 2 selbst stehen.

In einer weiteren Ausführung dient die Anbindungsstelle 8 vorzugsweise dazu, die Rohrleitung 2 selbst an einem Träger, insbesondere an einer Karosserie in einem Fahrzeug, zu fixieren
In Figur 1 und 2 ist eine weitere vorteilhafte Ausführung dargestellt. Die Rohrleitung 2 ist dabei derart hergestellt, dass die Anbindungsstelle 8 der ersten erfindungsgemäß hergestellten Rohrleitung 2 mit der Anbindungsstelle 8 der zweiten erfindungsgemäßen hergestellten Rohrleitung 2 verbunden ist. Die Anbindungsstellen 8 sind dabei gleichzeitig das Funktionselement für die jeweilige andere Rohrleitung 2. Hierbei sind die Anbindungsstellen 8 der ersten und der zweiten erfindungsgemäßen Rohrleitung 2 miteinander insbesondere stoffschlüssig verbunden, vorzugsweise verklebt, am bevorzugtesten verschweißt.

Figur 3 zeigt eine vorteilhafte Ausführungsform der Erfindung. Bei dieser Ausführung wird die Anbindungsstelle 8 als ein radial von dem Durchflussquerschnitt Q nach außenweisend ausgebildeter Sockel 8 ausgebildet. Insbesondere kann durch den radialen Abstand zur Wandung 4 ein Funktionselement, insbesondere ein Führungselement 10, vorzugsweise wie in Figur 2 dargestellt ein Clip 10, leicht an der Anbindungsstelle 8 montiert, insbesondere stoffschlüssig verbunden, vorzugsweise verklebt, am bevorzugtesten verschweißt werden. Weiterhin können wie in den Figuren 1 und 2 gezeigt, die als Sockel 8 ausgebildeten Anbindungsstellen 8 von zwei zumindest teilweise nebeneinander, insbesondere parallel, verlaufenden Rohrleitungen 2 verbunden werden. Mittels der Sockel 8 wird dabei insbesondere ein definierter Abstand zwischen den Wandungen 4 der Rohrleitungen 2 geschaffen. Weiterhin hat der radial von dem Durchflussquerschnitt Q wegweisend ausgebildete Sockel 8 den Vorteil, dass insbesondere das stoffschlüssige Verbinden, vorzugsweise mittels eines Schweißverfahrens, der Anbindungsstelle 8 mit einem Funktionselement, insbesondere einer Anbindungsstelle 8 einer anderen Rohrleitung 2 oder einem Führungselement 10, durch die Zugänglichkeit zur Anbindungsstelle 8 erleichtert wird. Die leichtere Zugänglichkeit ist weiterhin hinsichtlich der Qualitätskontrolle ein Vorteil.

Vorzugsweise wird der Sockel 8 kegelstumpfartig ausgebildet. Insbesondere weist der Sockel 8 dabei in seinem Innern einen Hohlraum 12 auf, welcher vorzugsweise zum Durchflussquerschnitt Q geöffnet ausgebildet ist. Die Kegelstumpfform verbessert auf vorteilhafte Art die Festigkeit der Anbindungsstelle 8 und verhindert ein radiales Eindrücken der Anbindungsstelle 8 in Richtung des Durchflussquerschnitts Q. Die Anbindungsstelle 8 kann insbesondere zusammen mit der Wandung 4 der Rohrleitung 2 in einem Formungsschritt des Rohrleitungsabschnitts 6 synchron mit der Wandung 4 geformt werden, dadurch wird der Herstellungsaufwand verringert. In den Figuren 1 und 2 ist eine vorteilhafte Ausbildung des kegelstumpfartigen Sockels 8 dargestellt. Die Kegelstumpfform weist dabei eine Pyramidenstumpfgeometrie auf. Alternativ kann die kegelstumpfartige Ausbildung der als Sockel 8 ausgebildeten Anbindungsstelle 8 auch eine Kreiskegelstumpfgeometrie aufweisen.

Insbesondere wird die Anbindungsstelle 8 derart hergestellt, dass die Anbindungsstelle 8 eine sich in einer Ebene erstreckende Anbindungsfläche 14 zur Anbindung von dem Funktionselement ausgebildet. Vorteilhaft kann durch die besondere Ausbildung der Anbindungsfläche 14 das Funktionselement besser an der Anbindungsstelle 8 montiert, insbesondere stoffschlüssig verbunden werden. Durch die sich in einer Ebene erstreckende Anbindungsfläche 14 wird eine Auflagefläche für das Funktionselement vergrößert. Das Funktionselement wird dabei insbesondere unmittelbar an der Anbindungsfläche 14 der Anbindungsstelle 8 angeordnet und wie vorgenannt verbunden. Die Anbindungsfläche 14 kann insbesondere unmittelbar auf der Wandung 4 der Rohrleitung 2 angeordnet werden oder alternativ insbesondere leicht in die Wandung 4 der Rohrleitung 2 radial in Richtung des Durchflussquerschnitts Q vertieft ausgebildet werden. In Figur 1 bis 3 ist die Anbindungsfläche 14 eine Deckfläche des Kegelstumpfs. Dadurch wird synergetisch durch den radialen Abstand zur Wandung 4 und der optimierten, sich zu einer Ebene parallel erstreckenden Anbindungsfläche 14 die Montage erleichtert und das Montageergebnis durch die größere Auflagefläche zwischen Anbindungsstelle 8 bzw. Anbindungsfläche 14 und Funktionselement verbessert.

In der Wandung 4 der Rohrleitung 2 ist, wie in Figur 3 und 4 dargestellt, mindestens eine Anschlussstelle 16 mit einer Öffnung 18 zum fluidischen Verbinden einer Anschlussleitung 20 mit dem Durchflussquerschnitt Q der Rohrleitung 2 ausgebildet. Erfindungsgemäß wird die Anschlussstelle 16 ausgebildet, indem die Anschlussstelle 16 senkrecht zur Trennebene X in der Wandung 4 der Rohrleitung 2 ausgebildet wird.

Insbesondere kann durch diese erfindungsgemäße Herstellung die hergestellte Rohrleitung 2, wie in den Figuren 1 und 2 dargestellt, vorteilhaft als Sammelleitung verwendet werden. Vorzugsweise wird die Anschlussstelle 16 als ein monolithisch mit der Wandung 4 ausgebildetes Formteil ausgebildet.

Sammelleitungen sind beispielsweise bei Kühlsystemen notwendig. Die Zu- und Abläufe für das Kühlmittel der Kühlplatten werden dabei in als Sammelleitung ausgebildeten Rohrleitungen 2 als Vor- bzw. Rücklauf geführt.

Eine Anschlussstelle 16 ist insbesondere eine in die Wandung 4 von einem Rohrleitungsabschnitt 6 eingebrachte Öffnung 18. An diese Öffnung 18 kann vorzugsweise, wie in Figur 4 dargestellt, ein Endstück der Anschlussleitung 20 unmittelbar verbunden werden.

Insbesondere wird das Verbinderteil oder das Endstück der Anschlussleitung 20 stoffschlüssig mir der Anschlussstelle 16, insbesondere durch ein Schweißen oder Kleben, vorzugsweise im Heizelement-Stumpfschweißverfahren, verbunden. Diesbezüglich kann die Anschlussstelle 16 mit einer, wie in Figur 4 dargestellt, Schweißkontur 22, insbesondere mit einer gestuften Geometrie aufweisend ausgebildet werden. Die gestufte Geometrie schafft vorteilhaft eine definierte Schweißfläche und eine gegenüber einer nicht gestuften Geometrie vergrößerten Wandstärke, wodurch ein Kollabieren der Rohrleitung 2 bei der Schweißung vermieden werden kann. Gemäß der in Figur 4 dargestellten Ausführung wird die Schweißkontur 22 mit einer umlaufenden Nut 24 zum Auffangen und Sammeln einer Schmelze, die insbesondere beim Verschweißen der Anschlussleitung mit der Anschlussstelle entsteht, aufweisend ausgebildet. Alternativ können vorzugsweise in der Nut 24 auch Klebereste aufgefangen und gesammelt werden, die beim Verkleben der Anschlussleitung 20 mit der Anschlussstelle 16 entstehen.

Erfindungsgemäß wird die Anbindungsstelle 8, wie in Figur 3 dargestellt, zum Durchflussquerschnitt Q der Rohrleitung 2 betrachtet um 90° zu der Anschlussstelle 16 in der Wandung 4 versetzt ausgebildet. Entsprechend sind, wie in Figur 1 und 2 dargestellt, jeweils zwei Anschlussstellen 16 je Rohrleitung 2 ausgebildet, wobei die Anschlussstellen 16 um 90° zum Durchflussquerschnitt Q ihrer jeweiligen Rohrleitung 2 betrachtet zu den Anbindungsstellen 8 ihrer jeweiligen Rohrleitung 2 versetzt ausgebildet sind. Insbesondere bei der Herstellung der Rohrleitung 2 mittels des Corrugators formen jeweils die zwei Formbacken 26, siehe Figur 5, einen Rohrleitungsabschnitt 6. Die Formbacken 26 öffnen sich in entgegengesetzte Öffnungsrichtungen O aus der Trennebene X heraus. Durch die versetzte Anordnung ist es möglich, die Anbindungsstelle 8 so anzuordnen, dass die Trennebene X der Formbacken 26 zentral durch die Anbindungsstelle 8 verläuft, wobei synchron in der Wandung 4 der Rohrleitung 2 die Anschlussstelle 16 geformt werden kann, indem die Anschlussstelle 16 senkrecht zur Trennebene X in der Wandung 4 ausgebildet wird. Weiterhin birgt diese Anordnung bei der Herstellung den Vorteil, dass die Anschlussstelle 16 mit radial zum Durchflussquerschnitt Q ausgebildeten Nuten 24 bzw. Rippen, insbesondere einer Schweißkontur 22, mit der jeweiligen Formbacke 26 ausgebildet werden kann, ohne dass eine Nachbearbeitung, z. B. Fräsen, notwendig ist. Zweckmäßig ist die Öffnung der Anschlussstelle 16 nach der Formgebung mittels der Formbacken 26 mit einer dünnen Materialschicht verschlossen. Vorteilhaft kann die Öffnung der Anbindungsstelle 16 leicht mit einem Schneidwerkzeug, zum Beispiel einem Messer oder einem Dorn, geöffnet werden. Das Öffnen der Anbindungsstelle 16 kann insbesondere erst zu einem Zeitpunkt der Endmontage, zum Beispiel zum Zeitpunkt, an dem die Rohrleitung 2 montiert wird, erfolgen. Dadurch wird verhindert, dass Verunreinigungen in die Rohrleitung 2 eindringen. Weiterhin kann die Rohrleitung 2 vorteilhaft auch nach einer ersten Inbetriebnahme nachträglich mit der Anschlussleitung 20 verbunden werden, indem die Öffnung der Anschlussstelle 16 erst geöffnet wird, wenn die Anschlussleitung 20 verbunden werden soll.

Vorteilhaft kann ein Toleranzausgleich zwischen den einzelnen Anschlussstellen 16 für die Anschlussleitung 20 und/oder Anbindungsstellen 8 und/oder den Anschlüssen für die Rohrleitung 2 selbst mittels einer vorteilhaften Ausführung generiert werden. Dadurch, dass ein Rohrleitungsabschnitt 6 als ein gewellter Wellrohrabschnitt mit einer gewellt ausgebildeten Wandung und/oder ein Rohrleitungsabschnitt 6 als ein glatter Glattrohrabschnitt 6a mit einer glatt ausgebildeten Wandung 4 ausgebildet wird, wird ein vorteilhafter Toleranzausgleich geschaffen. Der Wellrohrabschnitt ist in den Figuren nicht dargestellt. Insbesondere in einem Temperiersystem ist ein Toleranzausgleich zwischen den Kühlplatten und zwischen den Anschlüssen an einer Kühlplatte besonders vorteilhaft. Vorzugsweise weist die Rohrleitung 2 sowohl Glattrohrabschnitte 6a als auch Wellrohrabschnitte auf, wobei für den Toleranzausgleich insbesondere die vorteilhaften Eigenschaften der Wellrohrabschnitte genutzt werden und die Anschlussstellen 16 und die Anbindungsstellen 8 insbesondere jeweils in einem oder dem gleichen glatten Glattrohrabschnitt 6a angeordnet werden.

Vorzugsweise werden die Wandung 4 und/oder die Anbindungsstelle 8 und/oder die Anschlussstelle 16 aus einem thermoplastischen Kunststoff, insbesondere aus einem Polypropylen- und/oder aus einem Polyamidwerkstoff, hergestellt. Insbesondere werden diesbezüglich auch die Anschlussleitungen 20 zumindest teilweise aus selbigem Werkstoff gefertigt.

Insbesondere um eine verbesserte Schweißbarkeit der Wandung 4 der Rohrleitung 2 und/oder der Anbindungsstelle 8 und/oder der Anschlussstelle 16 in einem Laserschweißverfahren zu gewährleisten, werden die Wandung 4 und/oder die Anbindungsstelle 8 und/oder die Anschlussstelle 16 vorzugsweise aus einem Polypropylenwerkstoff mit einem Füllstoff, insbesondere Ruß, hergestellt. Die Rußfüllung verbessert die Laserabsorption und die Strukturierung der Schweißflächen.

Vorzugsweise wird die Wandung 4 zumindest teilweise durch Extrusion hergestellt. Insbesondere wird die Wandung 4 durch Koextrusion zumindest doppelwandig ausgebildet und/oder mit einer Wandbeschichtung überzogen. So kann vorteilhaft eine Rohrinnenschicht aus einem niedrigpreisigen Werkstoff mit geringeren Qualitätsmerkmalen und für eine Rohraußenschicht ein vergleichsweise teurerer Werkstoff mit höheren Qualitätsmerkmalen und einem größeren Widerstandspotential gegenüber äußeren Einflüssen eingesetzt werden. Insbesondere wird die Wandung 4 zumindest teilweise als Mehrlagenrohr ausgeführt, wobei in der Rohrinnenschicht ein Polypropylenwerkstoff und in der Außenschicht ein Polyamidwerkstoff eingesetzt ist. Vorzugsweise wird die Rohrinnenschicht aus einem niedrigpreisigen Polypropylenwerkstoff und die Rohraußenschicht aus einem teureren Polyamidwerkstoff gefertigt.

In den Figuren 1 und 2 ist zudem eine Rohrleitungsanordnung 1 für Fluide dargestellt, welche zumindest zwei Rohrleitungen 2 aufweist. Bei den Rohrleitungen 2 handelt es sich erfindungsgemäß bei zumindest einer, insbesondere bei beiden, um eine Rohrleitung 2 nach einem der zuvor genannten Ausführungsbeispiele. Die Rohrleitungen 2 umschließen jeweils mit einer Wandung 4 einen Durchflussquerschnitt Q für das Fluid. Diesbezüglich ist jeweils an der Außenseite der Wandung 4 zumindest eines Rohrleitungsabschnitts 6 mindestens eine Anbindungsstelle 8 zur Anbindung von einem Funktionselement angeordnet.

Erfindungsgemäß ist zumindest eine der Rohrleitungen 2 in einem Corrugator gemäß einem der zuvor genannten Herstellungsverfahren geformt und die Anbindungsstellen 8 sind jeweils als ein monolithisch mit der Wandung 4 ausgebildetes Formteil ausgebildet. Zumindest eine Anbindungsstelle 8 jeweils einer Rohrleitung 2 ist das Funktionselement für die jeweils andere Anbindungsstelle 8 der anderen Rohrleitung 2, wobei die Rohrleitungen 2 jeweils über zumindest eine ihrer Anbindungsstellen 8 miteinander verbunden sind. Vorzugsweise sind die Anbindungsstellen 8 miteinander stoffschlüssig verbunden, vorzugsweise verklebt, am bevorzugtesten verschweißt.

Die erfindungsgemäße Rohrleitungsanordnung 1 ermöglicht eine stabile und platzsparende Anordnung zweier fluidisch unabhängigen oder abhängigen Rohrleitungen 2. Beispielsweise kann eine derartige Rohrleitungsanordnung 1 in einem Kühlsystem eingesetzt werden, wobei die erste Rohrleitung 2 eine Zuführleitung und die zweite Rohrleitung 2 eine Rückführleitung ist. Insbesondere sind die miteinander verbundenen Rohrleitungen 2 zumindest teilweise nebeneinander, insbesondere parallel zueinander angeordnet.

### Bezugszeichenliste

- 1: Rohrleitungsanordnung
- 2: Rohrleitung
- 4: Wandung
- 6: Rohrleitungsabschnitt
- 6a: Glattrohrabschnitt
- 8: Anbindungsstelle/Sockel
- 10: Führungselement/Clip
- 12: Hohlraum
- 14: Anbindungsfläche
- 16: Anschlussstelle
- 18: Öffnung
- 20: Anschlussleitung
- 22: Schweißkontur
- 24: Nut
- 26: Formbacken

- O: Öffnungsrichtung
- X: Trennebene
- T: Trennlinie

## Patentansprüche

1. Verfahren zur Herstellung einer Rohrleitung (2), wobei die Rohrleitung (2) in einem Corrugator geformt wird und mit einer Wandung (4) einen freien Durchflussquerschnitt (Q) für ein Fluid umschließt, indem jeweils zwei Formbacken (26) einen Rohrleitungsabschnitt (6) umschließend formen und sich in entgegengesetzte Öffnungsrichtungen (O) aus einer Trennebene (X) heraus öffnen und dadurch die Rohrleitung (2) entformen, wobei in zumindest einem Rohrleitungsabschnitt (6) eine Anbindungsstelle (8) zur Anbindung eines Funktionselementes ausgebildet wird, indem die Trennebene (X) der Formbacken (26) zentral durch die Anbindungsstelle (8) verläuft und in der Wandung (4) der Rohrleitung (2) mindestens eine Anschlussstelle (16) mit einer Öffnung zum fluidischen Verbinden einer Anschlussleitung (20) mit dem Durchflussquerschnitt (Q) der Rohrleitung (2) ausgebildet wird,
**dadurch gekennzeichnet, dass** die Anschlussstelle (16) senkrecht zur Trennebene (X) in der Wandung (4) der Rohrleitung (2) ausgebildet wird und die Anbindungsstelle (8) zum Durchflussquerschnitt (Q) der Rohrleitung (2) betrachtet um 90° zu der Anschlussstelle (16) in der Wandung (4) versetzt ausgebildet wird.

2. Verfahren nach Anspruch 1,
**dadurch gekennzeichnet, dass** die Anbindungsstelle (8) als ein radial von dem Durchflussquerschnitt (Q) nach außen weisend ausgebildeter Sockel (8) ausgebildet wird.

3. Verfahren nach Anspruch 2,
**dadurch gekennzeichnet, dass** der Sockel (8) kegelstumpfartig ausgebildet wird, wobei der Sockel (8) in seinem Innern einen Hohlraum (12) aufweist, welcher zum Durchflussquerschnitt (Q) geöffnet ausgebildet ist.

4. Verfahren nach einem der Ansprüche 1 bis 3,
**dadurch gekennzeichnet, dass** die Anbindungsstelle (8) derart hergestellt wird, dass die Anbindungsstelle (8) eine sich in einer Ebene erstreckende Anbindungsfläche (14) zur Anbindung von dem Funktionselement ausgebildet hat.

5. Verfahren nach einem der Ansprüche 1 bis 4,,
**dadurch gekennzeichnet, dass** die Anschlussstelle (16) mit einer Schweißkontur (22) mit einer gestuften Geometrie aufweisend hergestellt wird.

6. Verfahren nach Anspruch 5,
**dadurch gekennzeichnet, dass** die Schweißkontur (22) mit einer umlaufenden Nut (24) zum Auffangen und Sammeln einer Schmelze, welche beim Verschweißen der Anschlussleitung mit der Anschlussstelle entsteht, oder Klebereste, die beim Verkleben der Anschlussleitung (20) mit der Anschlussstelle (16) entstehen, aufweisend ausgebildet wird.

7. Verfahren nach einem der Ansprüche 1 bis 6,
**dadurch gekennzeichnet, dass** ein Rohrleitungsabschnitt (6) als ein gewellter Wellrohrabschnitt mit einer gewellt ausgebildeten Wandung und/oder ein Rohrleitungsabschnitt (6) als ein glatter Glattrohrabschnitt (6a) mit einer glatt ausgebildeten Wandung (4) ausgebildet wird, wobei die Anschlussstellen (16) und die Anbindungsstellen (8) jeweils in einem oder dem gleichen glatten Glattrohrabschnitt (6a) angeordnet werden.

8. Verfahren nach einem der Ansprüche 1 bis 7,
**dadurch gekennzeichnet, dass** die Wandung (4) und/oder die Anbindungsstelle (8) und/oder die Anschlussstelle (16) aus einem thermoplastischen Kunststoff, insbesondere aus einem Polypropylen- und/oder aus einem Polyamidwerkstoff, hergestellt werden.

9. Verfahren nach einem der Ansprüche 1 bis 8,
**dadurch gekennzeichnet, dass** die Wandung (4) und/oder die Anbindungsstelle (8) und/oder die Anschlussstelle (16) aus einem Polypropylenwerkstoff mit Ruß als Füllstoff hergestellt werden.

10. Verfahren nach einem der Ansprüche 1 bis 9,
**dadurch gekennzeichnet, dass** die Wandung (4) zumindest teilweise, insbesondere durch Extrusion oder Koextrusion, zumindest doppelwandig ausgebildet und/oder mit einer Wandbeschichtung überzogen wird.

11. Verfahren nach einem der Ansprüche 1 bis 10,
**dadurch gekennzeichnet, dass** die Wandung (4) zumindest teilweise als Mehrlagenrohr ausgeführt wird, wobei in der Rohrinnenschicht ein Polypropylenwerkstoff und in der Außenschicht ein Polyamidwerkstoff eingesetzt wird.

12. Rohrleitung (2) für Fluide, mit einer Wandung (4), die einen Durchflussquerschnitt (Q) für das Fluid umschließt, wobei an der Außenseite der Wandung (4) zumindest eines Rohrleitungsabschnitts (6) mindestens eine Anbindungsstelle (8) zur Anbindung von einem Funktionselement angeordnet ist und in der Wandung (4) der Rohrleitung (2) mindestens eine Anschlussstelle (16) mit einer Öffnung zum fluidischen Verbinden einer Anschlussleitung (20) mit dem Durchflussquerschnitt (Q) der Rohrleitung (2) ausgebildet ist,
**dadurch gekennzeichnet, dass** die Anbindungsstelle (8) zum Durchflussquerschnitt (Q) der Rohrleitung (2) betrachtet um 90° zu der Anschlussstelle (16) in der Wandung (4) versetzt ausgebildet ist und die Rohrleitung (2) in einem Corrugator gemäß einem Herstellungsverfahren der Ansprüche 1 bis 11 geformt ist.

13. Rohrleitungsanordnung (1) für Fluide, aufweisend zumindest zwei Rohrleitungen (2) mit jeweils einer Wandung (4), die jeweils einen Durchflussquerschnitt (Q) für das Fluid umschließen, wobei die Rohrleitungen (2) jeweils an der Außenseite der Wandung (4) zumindest eines Rohrleitungsabschnitts (6) mindestens eine Anbindungsstelle (8) zur Anbindung von einem Funktionselement angeordnet ist,
**dadurch gekennzeichnet, dass** zumindest eine der Rohrleitungen (2) die Merkmale nach Anspruch 12 aufweist und die Anbindungsstellen (8) jeweils als ein monolithisch mit der Wandung (4) ausgebildetes Formteil ausgebildet sind und zumindest eine Anbindungsstelle (8) jeweils einer Rohrleitung (2) das Funktionselement für die jeweils andere Anbindungsstelle (8) der anderen Rohrleitung (2) ist, wobei die Rohrleitungen (2) jeweils über zumindest eine ihrer Anbindungsstellen (8) miteinander verbunden sind.

14. Rohrleitungsanordnung (1) nach Anspruch 13,
**dadurch gekennzeichnet, dass** die zumindest zwei Rohrleitungen (2) die Merkmale nach Anspruch 12 aufweisen.

## Claims

1. Process for producing a pipeline (2), wherein the pipeline (2) is formed in a corrugator and encloses a free flow cross section (Q) for a fluid with a wall (4), in that in each case two molding jaws (26) form a pipeline section (6) in an enclosing manner and open in opposite opening directions (O) out of a parting plane (X) and thereby demold the pipeline (2), wherein a connection location (8) for connecting a functional element is formed in at least one pipeline section (6), in that the parting plane (X) of the molding jaws (26) extends centrally through the connection location (8) and at least one connection point (16) having an opening for fluidically connecting a connection line (20) to the flow cross section (Q) of the pipeline (2) is formed in the wall (4) of the pipeline (2)
**characterized in that** the connection location (16) is formed perpendicularly to the parting plane (X) in the wall (4) of the pipeline (2) and the connection point (8) is formed offset by 90° to the connection location (16) in the wall (4), viewed with respect to the flow cross section (Q) of the pipeline (2).

2. Process according to claim 1,
**characterized in that** the connection location (8) is formed as a socket (8) pointing radially outwardly from the flow cross section (Q).

3. Process according to claim 2,
**characterized in that** the socket (8) is formed in the manner of a truncated cone, the socket (8) having in its interior a cavity (12) which is formed open towards the flow cross section (Q).

4. Process according to any one of claims 1 to 3,
**characterized in that** the connection location (8) is manufactured in such a way that the connection location (8) has formed a connection surface (14) extending in a plane for connection from the functional element.

5. Process according to any one of claims 1 to 4,
**characterized in that** the connection point (16) is formed with a welding contour (22) having a stepped geometry.

6. Process according to claim 5,
**characterized in that** the welding contour (22) is formed with a circumferential groove (24) for catching and collecting a melt that is produced when the connection line is welded to the connection point, or having adhesive residues that are produced when the connection line (20) is bonded to the connection point (16).

7. Process according to any one of claims 1 to 6,
**characterized in that** a pipeline section (6) is formed as a corrugated pipe section with a corrugated wall and/or a pipeline section (6) is formed as a flat corrugated pipe section (6a) with a flat wall (4), the connection locations (16) and the connection points (8) each being arranged in one or the same flat corrugated pipe section (6a).

8. Process according to any one of claims 1 to 7,
**characterized in that** the wall (4) and/or the connection location (8) and/or the connection point (16) are made of a thermoplastic material, in particular of a polypropylene material and/or of a polyamide material.

9. Process according to any one of claims 1 to 8,
**characterized in that** the wall (4) and/or the connection location (8) and/or the connection point (16) are produced from a polypropylene material with carbon black as filler.

10. Process according to any one of claims 1 to 9,
**characterized in that** the wall (4) is at least partially, in particular by extrusion or coextrusion, at least double-walled and/or coated with a wall coating.

11. Process according to any one of claims 1 to 10,
**characterized in that** the wall (4) is at least partially designed as a multilayer pipe, a polypropylene material being used in the pipe inner layer and a polyamide material being used in the outer layer.

12. Pipeline (2) for fluids, having a wall (4) which encloses a flow cross section (Q) for the fluid, at least one connection location (8) for the connection of a functional element being arranged on the outside of the wall (4) of at least one pipeline section (6), and at least one connection point (16) having an opening for the fluidic connection of a connection line (20) to the flow cross section (Q) of the pipeline (2) being formed in the wall (4) of the pipeline (2),
**characterized in that** the connection location (8) is formed offset from the flow cross section (Q) of the pipeline (2) by 90° with respect to the connection point (16) in the wall (4), as viewed, and the pipeline (2) is formed in a corrugator according to a manufacturing process of claims 1 to 11.

13. Pipeline arrangement (1) for fluids, comprising at least two pipelines (2) each having a wall (4), which each enclose a flow cross section (Q) for the fluid, the pipelines (2) each having arranged on the outside of the wall (4) of at least one pipeline section (6) at least one connection location (8) for the connection of a functional element
**characterized in that** at least one of the pipelines (2) has the features according to claim 12 and the connection locations (8) are each formed as a molded part monolithic with the wall (4), and at least one connection location (8) of each pipeline (2) is the functional element for the respective other connection location (8) of the other pipeline (2), the pipelines (2) each being connected to one another via at least one of their connection locations (8).

14. Pipeline arrangement (1) according to claim 13,
**characterized in that** the at least two pipelines (2) have the features according to claim 12.

## Revendications

1. Procédé de fabrication d'une conduite tubulaire (2), la conduite tubulaire (2) étant formée dans une onduleuse et entourant avec une paroi (4) une section transversale de passage libre (Q) pour un fluide, en ce que deux mâchoires de formage (26) forment respectivement une section de conduite tubulaire en l'entourant (6) et s'ouvrent dans des directions d'ouverture opposées (O) à partir d'un plan de séparation (X) et démoulent ainsi la conduite tubulaire (2), un point de liaison (8) étant réalisé dans au moins une section de conduite tubulaire (6) pour la liaison d'un élément fonctionnel, en ce que le plan de séparation (X) des mâchoires de formage (26) s'étend de manière centrale à travers le point de liaison (8) et au moins un point de raccordement (16) avec une ouverture est formé dans la paroi (4) de la conduite tubulaire (2) pour la liaison fluidique d'une conduite de raccordement (20) à la section transversale d'écoulement (Q) de la conduite tubulaire (2),
**caractérisé en ce que** le point de raccordement (16) est réalisé perpendiculairement au plan de séparation (X) dans la paroi (4) de la conduite tubulaire (2) et le point de liaison (8) est réalisé en décalage de 90° par rapport au point de raccordement (16) dans la paroi (4), considéré par rapport à la section transversale d'écoulement (Q) de la conduite tubulaire (2).

2. Procédé selon la revendication 1, **caractérisé en ce que** le point de liaison (8) est réalisé sous la forme d'un socle (8) configuré en étant orienté radialement vers l'extérieur de la section transversale d'écoulement (Q) .

3. Procédé selon la revendication 2, **caractérisé en ce que** le socle (8) est configuré sous forme tronconique, le socle (8) présentant à l'intérieur une cavité (12) qui est configurée sous forme ouverte vers la section transversale d'écoulement (Q).

4. Procédé selon l'une quelconque des revendications 1 à 3, **caractérisé en ce que** le point de liaison (8) est fabriqué de telle sorte que le point de liaison (8) forme une surface de liaison (14) s'étendant dans un plan pour la liaison de l'élément fonctionnel.

5. Procédé selon l'une quelconque des revendications 1 à 4, **caractérisé en ce que** le point de raccordement (16) est fabriqué avec un contour de soudage (22) présentant une géométrie étagée.

6. Procédé selon la revendication 5, **caractérisé en ce que** le contour de soudage (22) est configuré avec une rainure périphérique (24) pour recueillir et collecter une masse fondue qui se forme lors du soudage de la conduite de raccordement avec le point de raccordement, ou des résidus de colle qui se forment lors du collage de la conduite de raccordement (20) avec le point de raccordement (16).

7. Procédé selon l'une quelconque des revendications 1 à 6, **caractérisé en ce qu'**une section de conduite tubulaire (6) est configurée sous la forme d'une section tubulaire ondulée avec une paroi configurée sous forme ondulée et/ou une section de conduite tubulaire (6) est configurée sous la forme d'une section tubulaire lisse (6a) avec une paroi configurée sous forme lisse (4), les points de raccordement (16) et les points de liaison (8) étant respectivement agencés dans une ou la même section tubulaire lisse (6a).

8. Procédé selon l'une quelconque des revendications 1 à 7, **caractérisé en ce que** la paroi (4) et/ou le point de liaison (8) et/ou le point de raccordement (16) sont fabriqués en une matière thermoplastique, notamment en un matériau de polypropylène et/ou de polyamide.

9. Procédé selon l'une quelconque des revendications 1 à 8, **caractérisé en ce que** la paroi (4) et/ou le point de liaison (8) et/ou le point de raccordement (16) sont fabriqués en un matériau de polypropylène avec du noir de carbone en tant que charge.

10. Procédé selon l'une quelconque des revendications 1 à 9, **caractérisé en ce que** la paroi (4) est configurée au moins partiellement, notamment par extrusion ou coextrusion, au moins à double paroi et/ou est recouverte d'un revêtement de paroi.

11. Procédé selon l'une quelconque des revendications 1 à 10, **caractérisé en ce que** la paroi (4) est réalisée au moins partiellement sous forme de tube multicouche, un matériau de polypropylène étant utilisé dans la couche intérieure du tube et un matériau de polyamide dans la couche extérieure.

12. Conduite tubulaire (2) pour fluides, avec une paroi (4) qui entoure une section transversale de passage (Q) pour le fluide, au moins un point de liaison (8) pour la liaison d'un élément fonctionnel étant agencé sur le côté extérieur de la paroi (4) d'au moins une section de conduite tubulaire (6) et au moins un point de raccordement (16) avec une ouverture étant formé dans la paroi (4) de la conduite tubulaire (2) pour la liaison fluidique d'une conduite de raccordement (20) à la section transversale de passage (Q) de la conduite tubulaire (2),
**caractérisée en ce que** le point de liaison (8) est réalisé en décalage de 90° par rapport au point de raccordement (16) dans la paroi (4), considéré par rapport à la section transversale d'écoulement (Q) de la conduite tubulaire (2), et la conduite tubulaire (2) est formée dans une onduleuse par un procédé de fabrication selon les revendications 1 à 11.

13. Agencement de conduite tubulaire (1) pour fluides, présentant au moins deux conduites tubulaires (2) avec chacune une paroi (4), qui entourent chacune une section transversale d'écoulement (Q) pour le fluide, les conduites tubulaires (2) étant agencées chacune sur le côté extérieur de la paroi (4) d'au moins une section de conduite tubulaire (6) au moins un point de liaison (8) pour la liaison d'un élément fonctionnel,
**caractérisé en ce qu'**au moins l'une des conduites tubulaires (2) présente les caractéristiques selon la revendication 12 et les points de liaison (8) sont configurés chacun sous la forme d'une pièce moulée configurée sous forme monolithique avec la paroi (4) et au moins un point de liaison (8) d'une conduite tubulaire (2) respective est l'élément fonctionnel pour l'autre point de liaison (8) respectif de l'autre conduite tubulaire (2), les conduites tubulaires (2) étant reliées entre elles par l'intermédiaire d'au moins l'un de leurs points de liaison (8).

14. Agencement de conduite tubulaire (1) selon la revendication 13, **caractérisé en ce que** les au moins deux conduites tubulaires (2) présentent les caractéristiques selon la revendication 12.
